# EUROPEAN PATENT SPECIFICATION

(11) **EP 2 229 502 B1**
(45) Date of publication and mention of the grant of the patent: **26.06.2019**
(21) Application number: 08857051.0
(22) Date of filing: 19.11.2008
(51) Int. Cl.: E21B 43/00, C02F 1/52, C02F 1/56, C02F 103/10, C02F 101/10, C02F 101/20, E21B 21/06

(54) **DEWATERING OF SILICATE WELLBORE FLUIDS**
ENTWÄSSERN VON BOHRLOCHFLÜSSIGKEITEN AUF SILIKATBASIS
DÉSHYDRATATION DE FLUIDES DE PUITS DE FORAGE À BASE DE SILICATE

(30) Priority: 29.11.2007 US 991112 P
(43) Date of publication of application: 22.09.2010
(73) Proprietor: M-I LLC, Houston, TX 77072 (US)
(72) Inventor: GILMOUR, Alan, Houston TX 77077 (US); PATEL, Arvind, D., Sugar Land TX 77478 (US)
(74) Representative: Schlumberger Intellectual Property Department
(86) International application number: PCT/US2008/084025
(87) International publication number: WO 2009/073366

(56) References cited:
- WO-A1-00/71471
- US-A- 4 765 913
- US-A- 5 904 853
- US-A- 5 965 027
- US-A1- 2006 293 192
- US-B1- 6 312 601

## Description

### SUMMARY OF INVENTION

The present invention resides in a method of recycling a silicate-based wellbore fluid as defined in the appended claims.

Other aspects and advantages of the invention will be apparent from the following description and the appended claims.

### DETAILED DESCRIPTION

Silicate-based wellbore fluids have been well-established as an effective means of stabilizing shale formations. Despite being an effective shale stabilizer, silicate never achieved early, widespread success, owing to certain advantages held by oil-based drilling fluids, in particular, the ease of use of oil-based fluids, which are also not prone to gellation or precipitation, and good lubricating properties. Until recent environmental pressures there was little incentive to improve the performance deficiencies in silicate-containing, water- based drilling fluids. Thus, as mud designers have been able to overcome the traditional deficiencies of silicate-based fluids, there has also been an increasing need for disposal of waste generated from the use of silicate-based fluids.

In accordance with embodiments of the present disclosure, dewatering of silicate-based fluids may be provided to reduce the volume of drilling wastes associated with the silicate-based fluids. Such dewatering of silicate-based fluids may occur through coagulation, flocculation, and/or mechanical separation.

Coagulation occurs when the electrostatic charge on a solid is reduced, destabilizing the solid and allowing it to be attracted to other solids by van der Waals forces. However, coagulation is an aggregation of particles on a microscopic level. Flocculation is the binding of individual solid particles into aggregates of multiple particles on a macroscopic. Flocculation is physical, rather than electrical, and occurs when one segment of a flocculating polymer chain absorbs simultaneously onto more than one particle.
Mechanical separation includes mechanical devices (e.g., hydrocyclones and centrifuges) that

### SUMMARY OF INVENTION

In one aspect, embodiments disclosed herein relate to a method of recycling a silicate-based wellbore fluid that includes adding a flocculant and a polyelectrolyte coagulant to a silicate-based wellbore fluid containing solid contaminants therein; flocculating at least a portion of the contaminants out of the fluid phase; and separating the silicate-based fluid from the flocculated contaminants. The separated silicate-based wellbore fluid can then be re-used.

Other aspects and advantages of the invention will be apparent from the following description and the appended claims.

### DETAILED DESCRIPTION

Silicate-based wellbore fluids have been well-established as an effective means of stabilizing shale formations. Despite being an effective shale stabilizer, silicate never achieved early, widespread success, owing to certain advantages held by oil-based drilling fluids, in particular, the ease of use of oil-based fluids, which are also not prone to gellation or precipitation, and good lubricating properties. Until recent environmental pressures there was little incentive to improve the performance deficiencies in silicate-containing, water-based drilling fluids. Thus, as mud designers have been able to overcome the traditional deficiencies of silicate-based fluids, there has also been an increasing need for disposal of waste generated from the use of silicate-based fluids.

In accordance with embodiments of the present disclosure, dewatering of silicate-based fluids may be provided to reduce the volume of drilling wastes associated with the silicate-based fluids. Such dewatering of silicate-based fluids may occur through coagulation, flocculation, and/or mechanical separation.

Coagulation occurs when the electrostatic charge on a solid is reduced, destabilizing the solid and allowing it to be attracted to other solids by van der Waals forces. However, coagulation is an aggregation of particles on a microscopic level. Flocculation is the binding of individual solid particles into aggregates of multiple particles on a macroscopic. Flocculation is physical, rather than electrical, and occurs when one segment of a flocculating polymer chain absorbs simultaneously onto more than one particle. Mechanical separation includes mechanical devices (e.g., hydrocyclones and centrifuges) that remove solid particles from a solution.

To achieve the precipitation and aggregation of fine precipitates in a fluid (so that physical or mechanical separation of the precipitates from the fluid may occur), a flocculant may be added to a wellbore fluid. Flocculants suitable for use in the dewatering of the fluids of the present disclosure may include for example, high molecular weight (2,000,000-20,000,000) acrylic acid or acrylate-based polymers. The charge density of the polymers may range from 0-100 percent (in either charge direction). In a particular embodiment, the charge density may range from 0-80 percent. Thus, depending on the charges of the monomers, the resulting polymers may be cationic, anionic, or non-ionic. Commercial examples of such polyacryalmide- based flocculants include those sold under the trade names MAGNAFLOC® and ZETAG®, from Ciba Specialty Chemicals (Tarrytown, NY) and HYPERFLOC® from Hychem, Inc. (Tampa, FL).

In addition to a flocculant, a coagulant may be used to assist in aggregating colloidal particles within a fluid. When further use in downhole operations, such as drilling, of the silicate-based fluid is desired, a polyelectrolyte coagulant may be selected so that the pH of the fluid does not substantially change. This contrasts with selecting an acidic inorganic coagulant to reduce the pH of the fluid, and trigger coagulation and flocculation of the silicates within the fluid when disposal of the fluid is desired.

Examples of polyelectrolyte coagulants include water-soluble organic polymers that may be cationic, anionic, or non-ionic. In a particular embodiment, cationic polymers having molecular weights generally less than 500,000 may be used. However, higher molecular weight polymers (such as up to 20,000,000) may be used in yet other embodiments. The charge density of the polymers may range up to 100 percent. Cationic monomers may include diallyl dialkyl ammonium halides and dialkylaminoalkyl (meth) - acrylates and -acrylamides, (as acid addition or quaternary ammonium salts). In a particular embodiment, the coagulant may include poly diallyl dimethyl ammonium chloride.

Following flocculation of solid materials within a fluid, the flocs may settle to the bottom of a fluid, and be separated therefrom by mechanical means such as a centrifuge. In some embodiments, shaking and/or mixing of a treated fluid (with flocculants and coagulants) may be desirable to optimize solids flocculation formation. However, the level of shaking/mixing may depend on the type of coagulant used. For example, when using polymeric coagulants, gentle shaking or mixing is preferred to mix the polymer therein without affecting the polymers' efficacy at aiding flocculation.

### EXAMPLES

The following example was performed to test the efficacy of dewatering silicate wellbore fluids. A sample silicate wellbore fluid was formulated as shown below in Table 1, and the mud properties tested with a Fann 35 Viscometer from the Fann Instrument Company, shown below in Table 2. FED PAC™, polyanionic cellulose, and FED ZAN™, a zanthan gum, are available from the Federal Division of M-I LLC.

**Table 1**

| Component | Amount | Amount (metric units) |
|---|---|---|
| Water | 0.8798 bbl | 140 litres |
| Potassium silicate | 36.75 ppb | 104.74 gm/litre |
| Potassium carbonate | 0.53 ppb | 1.51 gm/litre |
| FED PAC UL | 2.8 ppb | 7.98 gm/litre |
| FED ZAN D | 1.05 ppb | 2.99 gm/litre |
| tetrapotassium pyrophosphate | 2.6 ppb | 7.41 gm/litre |
| Cal Carb 0 | 10.5 ppb | 29.93 gm/litre |
| Cal Carb 325 | 10.5 ppb | 29.93 gm/litre |
| Rev Dust | 10.5 ppb | 29.93 gm/litre |

**Table 2**

| | |
|---|---|
| Mud weight | 9.12 ppg = 1.09Kg/litre |
| Rheology Temp | 120°F = 49°C |
| 600rpm | 39 |
| 300rpm | 26 |
| 200rpm | 21 |
| 100rpm | 15 |
| 6rpm | 4 |
| 3rpm | 3 |
| PV | 13cps = 13mPa.s |
| YP | 131bs/100ft² = 649gm/m² |
| 10s gel | 4 |
| 10m gel | 5 |
| API filtrate | 7.0 mL |
| pH | 11.9 |

20 mL samples of the fluid shown in Table 1 were placed in 40 cc vial containers after mixing of the fluid in a Hamilton Beach mixer. The materials shown below in Table 3 were tested by adding them to the fluid, and shaking them while observing for solids flocculation formation. The specific products tested include MAGNAFLOC® 368, a poly diallyl dimethyl ammonium chloride commercially available from Ciba Specialty Chemicals; HYPERFLOC® AF 307, a 30% anionic polyacrylamide from Hychem, Inc.; and (for comparison) aluminum chloride. When adding inorganic coagulants, heavy shaking was used to optimize solids flocculation formation. When adding a polymer coagulant to the fluid, heavy shaking was avoided, and gentle shaking by turning the vials upside down and then right side up (and repeating if necessary) to mix the polymer in the fluid without destroying the polymers' effectiveness at flocculating the solids. The mixing was repeated until flocculation of solids was observed and did not increase in size. Various observations of the results were made, as detailed below in Table 3

**Table 3**

| **Fluid** | | | | | **Performance** | | | |
|---|---|---|---|---|---|---|---|---|
| Sample | Products | | | | Floc Formation | | Floc Settling Rate | water clarity |
| | 2.0% coag | 0.2% Floc | ml used coag | ml used Floc | size | rate | | |
| 1 | MF 368 | AF 307 | 5 | 0.3 | large | fast | fast | clear |
| 2 | MF 368 | AF 307 | 4.25 | 0.3 | small | fast | fast | clear |
| 3 | MF 368 | AF 307 | 3.75 | 0.3 | small | slow | slow | slightly cloudy |
| 4 (comparative) | AlCl₃ | AF 307 | 7 | 0.8 | small | slow | slow | slightly cloudy |
| 5 (comparative) | AlCl₃ | AF 307 | 8 | 0.6 | bulky | fast | fast | clear |

As shown in the above results, MAGNAFLOC® in combination with HYPERFLOC® AF 307 dewatered the fluid successfully. In addition, an analytical test of Sample 1 showed that the supernatant contains 1560 mg/L silicate, which represents most (if not all) of the silicate in the fluid, while the solids portion contains very little, if any at all. Aluminum chloride in combination with HYPERFLOC® AF 307 dewatered the silicate fluid successfully as well. An analytical test of Sample 5 showed that the supernatant contains only 160 mg/L silicate, indicating that the remainder of the silicate was flocculated with the solids.

Advantageously, embodiments of the present disclosure may separate solids and fine particles from the liquid phase of drilling fluid, thereby leaving a clarified aqueous solution.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method of recycling a silicate-based wellbore fluid by removing contaminants therefrom, while retaining silicates therein comprising:
adding a flocculant and a polyelectrolyte coagulant to a silicate-based wellbore fluid containing contaminants therein, wherein the flocculant comprises a copolymer of acrylic acid and/or acrylate compounds and wherein the polyelectrolyte is selected so that the pH of the fluid does not change;
flocculating at least a portion of the contaminants out of the fluid phase, wherein the silicates remain in the fluid;
separating the silicate-based fluid from the flocculated contaminants; and
reusing the separated silicate-based wellbore fluid.

2. The method of claim 1, wherein the copolymer has a molecular weight in a range from 2,000,000 to 20,000,000.

3. The method of any of claims 1 or 2, wherein the polyelectrolyte coagulant comprises a cationic polymeric coagulant.

4. The method of claim 3 , wherein the cationic coagulant comprises a polymer of a cationic monomer which is a diallyl dialkyl ammonium halide or a dialkylaminoalkyl (meth) -acrylate or -acrylamide.

5. The method of claim3, wherein the cationic coagulant comprises poly diallyl dimethyl ammonium chloride.

6. The method of any one of claims 3 to 5 , wherein the cationic polymeric coagulant has a molecular weight not exceeding 500,000.

## Patentansprüche

1. Verfahren zum Recyceln eines Bohrlochfluids auf Silikatbasis durch Entfernen von Verunreinigungen aus demselben unter Rückbehalten von Silikaten in demselben, das umfasst:
Zugeben eines Flockungsmittels und eines Polyelektrolytkoagulans zu einem Verunreinigungen enthaltenden Bohrlochfluid auf Silikatbasis, wobei das Flockungsmittel ein Copolymer von Acrylsäure- und/oder Acrylatverbindungen umfasst und wobei das Polyelektrolyt so gewählt ist, dass sich der pH-Wert des Fluids nicht ändert;
Ausflocken wenigstens eines Teil der Verunreinigungen aus der fluiden Phase, wobei die Silikate im Fluid verbleiben;
Separieren des Fluids auf Silikatbasis von den ausgeflockten Verunreinigungen; und
Wiederverwenden des separierten Bohrlochfluids auf Silikatbasis.

2. Verfahren nach Anspruch 1, wobei das Copolymer ein Molekulargewicht in einem Bereich von 2.000.000 bis 20.000.000 aufweist.

3. Verfahren nach einem der Ansprüche 1 oder 2, wobei das Polyelektrolytkoagulans ein kationisches Polymerkoagulans umfasst.

4. Verfahren nach Anspruch 3, wobei das kationische Koagulans ein Polymer eines kationischen Monomers umfasst, bei dem es sich um ein Diallyldialkylammoniumhalogenid oder ein Dialkylaminoalkyl(meth)acrylat oder -acrylamid handelt.

5. Verfahren nach Anspruch 3, wobei das kationische Koagulans Polydiallyldimethylammoniumchlorid umfasst.

6. Verfahren nach einem der Ansprüche 3 bis 5, wobei das kationische Polymerkoagulans ein Molekulargewicht von nicht mehr als 500.000 aufweist.

## Revendications

1. Procédé de recyclage d'un fluide de puits de forage à base de silicate par élimination des contaminants du fluide, tout en retenant les silicates qui y sont contenus, comprenant :
l'ajout d'un floculant et d'un coagulant polyélectrolytique à un fluide de puits de forage à base de silicate contenant des contaminants, le floculant comprenant un copolymère de composés d'acide acrylique et/ou d'acrylate et le polyélectrolyte étant choisi de telle sorte que le pH du fluide ne change pas ;
la floculation d'au moins une partie des contaminants hors de la phase fluide, les silicates restant dans le fluide ;
la séparation du fluide à base de silicate des contaminants floculés; et
la réutilisation du fluide de puits de forage à base de silicate séparé.

2. Procédé selon la revendication 1, dans lequel le copolymère a un poids moléculaire compris dans une plage de 2 000 000 à 20 000 000.

3. Procédé selon l'une quelconque des revendications 1 ou 2, le coagulant polyélectrolytique comprenant un coagulant polymère cationique.

4. Procédé selon la revendication 3, le coagulant cationique comprenant un polymère d'un monomère cationique qui est un halogénure de diallyl-dialkyl- ammonium ou un dialkylaminoalkyl (meth) -acrylate ou-acrylamide.

5. Procédé selon la revendication 3, dans lequel le coagulant cationique comprend du chlorure de poly (diallyl-diméthyl-ammonium).

6. Procédé selon l'une quelconque des revendications 3 à 5, le coagulant polymère cationique ayant un poids moléculaire ne dépassant pas 500 000.
